Europäisches Patentamt

European Patent Office

Office européen des brevets

(19)

(11) **EP 1 148 287 B1**

(12) **EUROPEAN PATENT SPECIFICATION**

(45) Date of publication and mention
of the grant of the patent:
**08.12.2004 Bulletin 2004/50**

(51) Int Cl.⁷: **F16M 7/00**, F01D 25/28

(21) Application number: **00107796.5**

(22) Date of filing: **11.04.2000**

(54) **A self leveling machine support**

Selbstnivellierende Maschinenlagerung

Support de machine à auto-réglage de niveau

(84) Designated Contracting States:
**AT BE CH CY DE DK ES FI FR GB GR IE IT LI LU
MC NL PT SE**

(43) Date of publication of application:
**24.10.2001 Bulletin 2001/43**

(73) Proprietor: **Dresser-Rand Company
Corning, New York 14830 (US)**

(72) Inventor: **Voorhees, Peter Garrett
Almond, New York 14804 (US)**

(74) Representative: **Becker Kurig Straus
Patentanwälte
Bavariastrasse 7
80336 München (DE)**

(56) References cited:
**EP-A- 0 785 389**      **FR-A- 2 315 056**
**US-A- 4 527 761**      **US-A- 5 509 782**

**Description**

FIELD OF INVENTION

This invention is related generally to supports and, more particularly, to a self leveling support for a machine.

BACKGROUND OF THE INVENTION

Machines often require one or more structures to support various sections or portions of the machine above a ground surface. For example, steam turbines often have a structure positioned under each of the bearing case assemblies located at opposite ends of the steam turbine. These structures provide a level platform for supporting the bearing case assemblies. EP 785 389 A describes such a machine, and a support according to the preamble of claim 1.

One of the problems with these prior structures is with the changes which can occur as a result of thermal expansion. Often the machines being supported by these structures operate at high temperatures. The heat generated by these machines causes the structures to grow. Unfortunately, different portions or sections of the structure are often heated at different rates depending upon their distance from the heat source, in this example the machine. As a result, these different portions or sections of the structures grow at different rates resulting in alignment problems. For example, with a steam turbine the structures no longer provide a level platform for the bearing case assemblies.

SUMMARY OF THE INVENTION

A support in accordance with the invention is described in the appended claims.

The self leveling support for a machine provides a number of advantages. For example, one of the advantages is that the self leveling support is designed to compensate for the effects of thermal expansion. As a result, the support remains properly aligned with respect to the machine or portion of the machine it is supporting regardless of the heat being generated by the machine or other heat source.

Another advantage of the present invention is that the self leveling support remains properly aligned with respect to the machine or portion of the machine it is supporting even when different portions of the support are experiencing different rates of thermal expansion. Typically, one portion of the support will be closer to the heat source, then another portion. As a result, the one portion will grow more than the other portion. The present invention compensates for these different rates of thermal expansion.

Yet another advantage of the present invention is that the self leveling support is able to maintain a surface of the self leveling support in a plane which is substantially parallel to the plane the surface was resting in prior to any thermal expansion. As discussed above, the self leveling support is able to compensate for thermal expansion and for different rates of thermal expansion within the support.

BRIEF DESCRIPTION OF THE DRAWINGS

FIG. 1 is a side view of a machine with a self leveling support in accordance with one embodiment of the present invention;
FIG. 2A is a side view of the self leveling support in a cold state and in a hot state (shown in phantom);
FIG. 2B is a diagram illustrating the relationship of the different lengths and positions of supporting structures in the self leveling support shown in FIG. 2A; and
FIG. 3 is a side view of a self leveling support in accordance with another embodiment of the present invention.

DETAILED DESCRIPTION

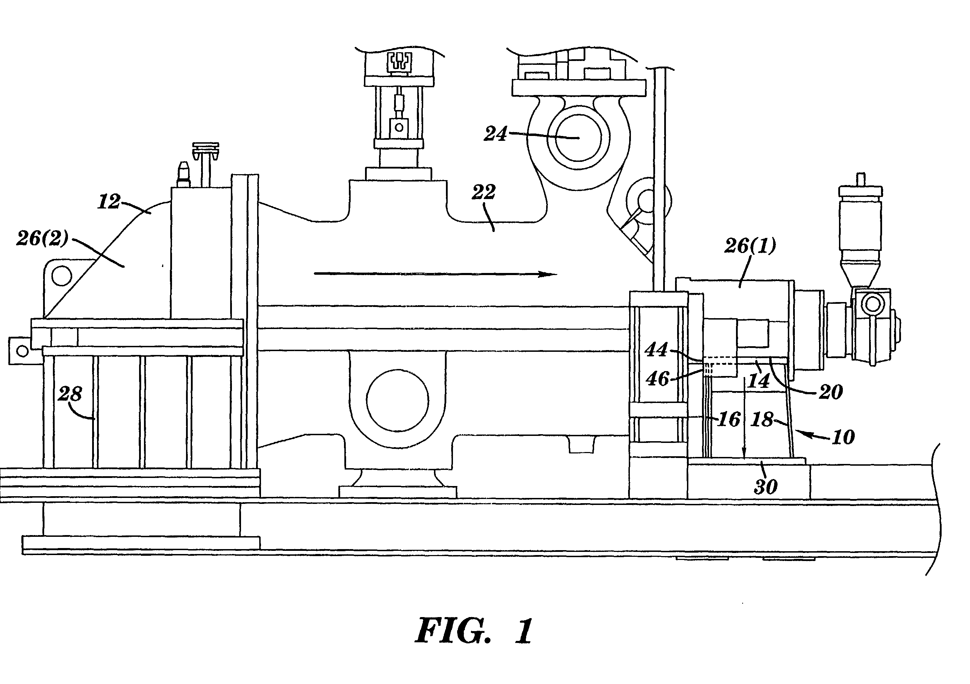

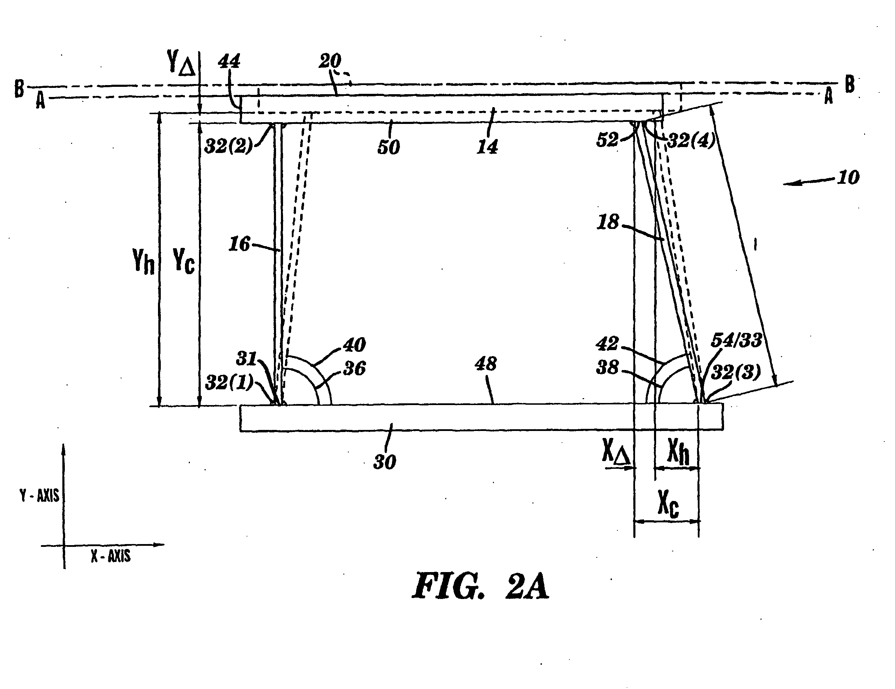

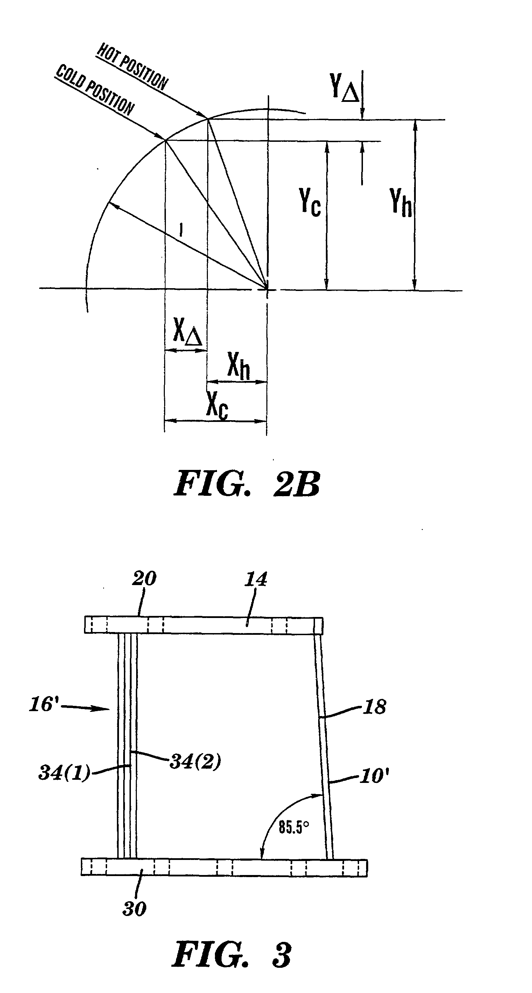

A self leveling support 10 for a machine 12 in accordance with one embodiment of the present invention is illustrated in FIGS. 1 and 2. The self leveling support 10 includes a top plate 14, a first support plate 16, and a second support plate 18. The self leveling support 10 provides a number of advantages including providing a support 10 which not only compensates for thermal expansion, but is able to compensate for different rates of thermal expansion within the support 10. Additionally, the self leveling support 10 is able to maintain a surface 20 of the top plate 14 in a plane B-B which is substantially parallel to a plane A-A the surface 20 was resting in prior to thermal expansion.

Referring more specifically to FIG. 1, the machine 12 with a self leveling support 10 in accordance with one embodiment of the present invention is illustrated. In this particular embodiment, the machine 12 is a steam turbine, although the support 10 can be used with other types of machines. The machine 12 includes a housing 22 with an inlet 24 to receive steam and bearing case assemblies 26(1) and 26(2) located at opposing ends of the housing 22. Supports 10 and 28 are positioned under the bearing case assemblies 26(1) and 26(2) and are used to hold and provide a level surface 20 for each of the bearing case assemblies 26(1) and 26(2). In this particular embodiment, the level surface 20 is substantially horizontal. although the surface 20 could rest in other planes. Steam, which is used to drive the turbine, is introduce via the inlet 24. As a result, the temperature of the portion or section of the steam turbine adjacent the inlet 24 rises during operation of the turbine. In this particular embodiment, the portion of the housing 22 adjacent support 28 does not generate much heat. As a result, support 28 does not experience much thermal growth during operation of machine 12. If support 28 did experience more thermal growth, support 28 could be replaced with another support like self leveling support 10 to compensate for the thermal expansion.

Referring to FIG. 2A, the self leveling support 10 in accordance with one embodiment of the present invention in cold and hot states is illustrated. The first and second support plates 16 and 18 are each connected between the top plate 14 and a base 30. The connection points 32(1), 32(2), 32(3), and 32(4) between the first and second support plates 16 and 18 and the top plate 14 and the base 30 are designed to permit some movement between the top plate 14 and the first and second support plates 16 and 18 and also between the base 30 and the first and second support plates 16 and 18 without breaking the connections 32(1), 32(2), 32(3), and 32(4). In this particular embodiment, the ends of the first and second support plates 16 and 18 are connected to the top plate and to the base by welds, although other types of connections 32(1), 32(2), 32(3), and 32(4), such as mechanical pivoting connections, can also be used. Although one example of the first and second support plates 16 and 18 is shown, other types of supporting structures can also be used for the first and second support plates 16 and 18 as would be readily apparent to one of ordinary skill in the art. For example, as shown in FIG. 3, the self leveling support 10' the first support plate 16' may comprise a pair of plates 34(1) and 34(2) which are connected between the top plate 14 and the base 30.

Referring back to FIG. 2A, to compensate for thermal expansion of the self leveling support 10, the first support plate 16 is made shorter than the second support plate 18, although the length of the first support plate 16 with respect to the second support plate 18 can vary based on the particular application. The amount the first and second support plates 16 and 18 will grow depends upon the temperature the first and second support plates 16 and 18 are exposed to, the duration the first and second support plates 16 and 18 are exposed to the increased temperature, and the coefficient of thermal expansion of the first and second support plates 16 and 18. The first support plate 16 has a first coefficient of thermal expansion and the second support plate 18 has a second coefficient of thermal expansion. In this particular embodiment, the first and second support plates 16 and 18 are made of the same material and thus the first and second coefficient of thermal expansions are the same, although the material used for and the coefficient of thermal expansion of the first and second plates 16 and 18 can be different.

To compensate for thermal expansion of the self leveling support 10, the first support plate 16 and the second support plate 18 are also connected to the base 30 at different angles, although the angles at which the first and second support plates 16 and 18 are connected to the base 30 can vary based on the particular application. In a cold state, the first support plate 16 is connected to the base 30 at a first cold state angle 36 and the second support plate 18 is connected at a second cold state angle 38. By way of example only, in this particular embodiment the first cold state angle 36 is about 90 degrees and the second cold state angle 38 is about 85.5 degrees. In a hot state, the first support plate 16 is connected to the base 30 at a first hot state angle 40 and the second support plate 18 is connected to base 30 at a second hot state angle 42. Although a base 30 is shown in this particular embodiment, the base 30 is optional. The ends 31 and 33 of the first and second support plates 16 and 18 could be connected to a supporting surface directly without a base.

The top plate 14 has a surface 20 which rests in a first plane A-A. In this particular embodiment, the first plane A-A is substantially horizontal, although the surface can rest in other planes. The bearing case assembly 26(1) rests on this surface 20 of the top plate 14. One of the advantages of the present invention is that the self leveling support 10 is able to maintain a level surface 20 for supporting the bearing case assembly 26(1) even during thermal expansion. In this particular embodiment, one end or side edge 44 of the top plate 14 also rests against a surface 46 of the machine 12, although the side edge 44 of the top plate 14 does not need to contact the machine 12.

Referring to FIGS. 2A and 2B, the different lengths, positions, and connection points of the first and second support plates 16 and 18, the top plate 14 and the base 30 for self leveling support 10 are illustrated. The height of the self leveling support 10 in a cold state measured along the Y-axis between one surface 48 of the base 30 and another surface 50 of the top plate 14 is shown as $Y_C$, the height of the self leveling support 10 in a hot state measured between one surface 48 of the base 30 and another surface 50 of the top plate 14 is shown as $Y_H$, and the difference between $Y_H$ and $Y_C$ is shown as $Y_\Delta$. The offset or compensating distance in the cold state measured along the X-axis from the location where one end 52 of the second support plate 18 is connected to the top plate 14 to the location the other end 54 of the second support plate 18 is connected to the base 30 is $X_C$, the offset or compensating distance in the hot state measured along the X-axis from the location one end 52 of the second support plate 18 is connected to the top plate 14 to the location the other end 54 of the second support plate 18 is connected to the base is $X_H$, and the difference between $X_C$ and $X_H$ is shown as $X_\Delta$. The length of the second support plate 18 in the cold state is shown as 1. By way of example, when the other variables are known or are measured through experimentation, the offset or compensating distance $X_C$ can be solved for as illustrated in the equations below:

$$1^2 = X_c^2 + Y_c^2 \qquad X_h = X_c - X_\Delta$$

$$1^2 = X_h^2 + Y_h^2 \qquad Y_h = Y_c + Y_\Delta$$

Solve for $X_c$

$$X_c^2 + Y_c^2 = (X_c - X_\Delta)^2 + (Y_c + Y_\Delta)^2$$

$$X_c^2 + Y_c^2 = X_c^2 - 2X_c X_\Delta + X_\Delta^2 + Y_c^2 + 2Y_c Y_\Delta + Y_\Delta^2$$

$$2X_c X_\Delta = X_\Delta^2 + 2Y_c Y_\Delta + Y_\Delta^2$$

$$X_c = \frac{X_\Delta^2 + 2Y_c Y_\Delta + Y_\Delta^2}{2X_\Delta}$$

The operation of the self leveling support 10 will be explained with reference to FIGS. 1 and 2A. Prior to operation of the machine 12, the machine 12 and the self leveling support 10 are in a cold state. In this particular embodiment, the first support plate 16 is initially connected to the top plate 14 at about a right angle. Meanwhile, the second support plate 18 is initially connected to the base 30 at an angle less than ninety degrees. As a result, the second support plate 18 is slightly longer than the first support plate 16 to keep the surface 20 of the top plate 14 level with a first plane A-A in the cold state. The self leveling support 10 in the cold state is shown in solid lines in FIG. 2A.

During operation of the machine 12, the steam enters the machine 12 via the inlet 24 and heats the housing 22 adjacent the inlet 24. The housing 22 acts as a heat source for any surround structures including the self leveling support 10. Since the first support plate 16 is located closer to the operating machine 12 than the second support plate 18, the first support plate 16 experiences higher temperatures and more heat than the second support plate 18 which is spaced further away from the machine 12. As a result, the first support plate 16 experiences more vertical thermal expansion than the second support plate 18.

Meanwhile, the heat also cause the machine 12 to itself expand. As a result, the machine 12 expands towards the self leveling support 10 and pushes the top plate 14 away from the machine 12 causing the self leveling support 10 to "sway" to the right in this example. In particular embodiment, the side edge 44 of the top plate 14 rests against the surface 46 of the machine 12, although other configurations can be used, such as spacing side edge 44 adjacent to, but not in contact with surface 46 in a cold state. The movement of the top plate 14 along with the thermal growth and movement of the first and second support plates 16 and 18 moves the first support plate 16 up and to the right so that the first support plate 16 is now connected to the base 30 at an angle 40 which is less than ninety degrees in this example. The movement of the top plate 14 along with the expansion and movement of the first and second support plates 16 and 18 also moves the second support plate 18 to the right so that the second support plate 18 is now connected to the base 30 at an angle 42 which begins to approach ninety degrees. An advantage of the present invention is the self leveling support's 10 ability to not only compensate for the effects of thermal expansion, but its ability to compensate for differing rates of thermal expansion within the support 10.

The length of the first and second support plates 16 and 18 in the cold state and the particular angles 36 and 38 at which the first and second support plates 16 and 18 are initially connected to the base 30 in the cold state are selected based upon the different temperatures the first and second support plates 16 and 18 will experience in a hot state, the duration of the higher temperatures, and the coefficients of thermal expansion of the first and second support plates 16 and 18 so that the surface 20 of the top plate 14 remains level in a plane B-B in the hot state. The plan B-B on which the surface 20 of the top plate 17 rests in the hot state is substantially parallel to the plane A-A the surface 20 of the top plate 14 rests in the cold state. The particular lengths and connection angles of first and second support plates 16 and 18 to the base 30 and top plate 14 will vary from application to application. These lengths and angles can be determined experimentally by measuring the growth the first and second support plates 16 and 18 experience at the temperatures they will experience in the particular application and/or by calculating the growth the first and second support plates 16 and 18 using the temperatures they will experience and the coefficients of thermal expansion of the first and second support plates 16 and 18.

Having thus described the basic concept of the invention, it will be rather apparent to those skilled in the art that the foregoing detailed disclosure is intended to be presented by way of example only, and is not limiting. Various alterations, improvements, and modifications will occur and are intended to those skilled in the art, though not expressly stated herein. These alterations, improvements, and modifications are intended to be suggested hereby, and are within the spirit and scope of the following claims.

**Claims**

1. Support (10) for supporting a machine (12) relative to a base surface (48) while said machine (12) is subjected to a heat source; said support (10) comprising a top plate (14) having a support surface (20) extending along a first plane (A-A) prior to thermal expansion and adapted to receive said machine (12); a first plate (16) extending from said base surface (48) to said top plate (14) and supporting it; a second plate (18) extending from said base surface (48) to said top plate (14) and supporting it, said second plate (18) being in a spaced relation to said first plate (16); said first and second plates (16, 18) being subjectable to different thermal expansions in response to said application of said heat source; **characterized in that** said first and second plates (16, 18) have lengths different before and after said thermal expansion and extend at angles different before and after said thermal expansion; wherein said lengths and said angles are selected such that after said thermal expansion of said first and second plates (16, 18) said top plate (14) extends in a second plane (B-B) substantially parallel to said first plane (A-A).

2. Support according to claim 1, **characterized in that** said lengths are said respective lengths of said first and second plates (16, 18) extending from said top plate (14) to said base surface (48), and said angles are said respective angles (36, 38, 40, 42) in which said first and second plates (16, 18) extend relative to said base surface (48).

3. Support according to claim 1, **characterized in that** said top plate (14), and therefore said machine (12), extends substantially horizontally before and after said thermal expansion.

4. Support according to claim 1, **characterized in that** said first and second plates (16, 18) have a same coefficient of thermal expansion and wherein one of said first and second plates (16, 18) extends closer to said heat source than said other plate and therefore is subjected to greater thermal expansion than said other plate.

5. Support according to claim 4, **characterized in that** said length of said one plate is less than that of said other plate.

6. Support according to claim 1, **characterized in that** before said thermal expansion, one of said first and second plates (16, 18) extends at an angle of approximately 90 degrees relative to said base surface (48) and said other plate extends at an angle less than 90 degrees relative to said base surface (48).

7. Support according to claim 6, **characterized in that** after said thermal expansion, said one plate extends at an angle less than 90 degrees relative to said base surface (48), and said other plate extends at an angle less than 90 degrees relative to said base surface (48).

8. Support according to claim 1, **characterized in that** said machine (12) thermally expands in response to said application of said heat source, and wherein said top plate (14) and said first and second plates (16, 18) are located relative to said machine (12) so that they move in response to said latter thermal expansion.

9. Support according to claim 8, **characterized in that** said lengths and said angles are selected to accommodate said latter thermal expansion.

**Patentansprüche**

1. Träger (10) zum Tragen einer Maschine (12) relativ zu einer Basisoberfläche (48), während die Maschine (12) einer Hitzequelle ausgesetzt ist; wobei der Träger eine obere Platte ( 14) mit einer Trageoberfläche (20) umfasst, die sich vor der thermischen Ausdehnung entlang einer ersten Ebene (A-A) erstreckt und angepasst ist, die Maschine (12) aufzunehmen; wobei sich eine erste Platte (16) von der Basisoberfläche (48) zu der oberen Platte (14) erstreckt und diese trägt; wobei sich eine zweite Platte (18) von der Basisoberfläche (48) zu der oberen Platte (14) erstreckt und diese trägt, wobei die zweite Platte (18) räumlich beabstandet zu der ersten Platte (16) ist; wobei die erste und die zweite Platte (16,18) in Reaktion auf den Einsatz der Hitzequelle verschiedenen thermischen Ausdehnungen unterworfen werden können; **dadurch gekennzeichnet dass**, die erste und die zweite Platte (16,18) vor und nach der thermischen Ausdehnung unterschiedliche Längen aufweisen und sich vor und nach der thermischen Ausdehnung mit unterschiedlichen Winkeln erstrecken; wobei die Längen und die Winkel so ausgewählt sind, dass nach der thermischen Ausdehnung der ersten und der zweiten Platte (16,18) sich die obere Platte (14) in einer zweiten Ebene (B-B) im Wesentlichen parallel zu der ersten Ebene (A-A) erstreckt.

2. Träger gemäß Anspruch 1, **dadurch gekennzeichnet, dass** die Längen die jeweiligen Längen der ersten und zweiten Platte (16,18) sind, die sich von der oberen Platte (14) zu der Basisoberfläche (48) erstrecken, und dass die Winkel die jeweiligen Winkel (36, 38,40,42) sind, in welchen sich die erste und zweite Platte (16,18) relativ zu der Basisoberfläche (48) erstrecken.

3. Träger gemäß Anspruch 1, **dadurch gekennzeichnet, dass** die obere Platte (14), und infolgedessen die Maschine (12), sich vor und nach der thermischen Ausdehnung im Wesentlichen horizontal erstrecken.

4. Träger gemäß Anspruch 1, **dadurch gekennzeichnet, dass** die erste und die zweite Platte (16,18) denselben Wärmeausdehnungskoeffizienten aufweisen, und wobei sich die erste oder die zweite Platte (16,18) näher an der Hitzequelle als die andere Platte erstreckt und infolgedessen stärkerer thermischer Ausdehnung als die andere Platte unterworfen ist.

5. Träger gemäß Anspruch 4, **dadurch gekennzeichnet, dass** die Länge der einen Platte geringer als die der anderen Platte ist.

6. Träger gemäß Anspruch 1, **dadurch gekennzeichnet, dass** sich vor der thermischen Ausdehnung eine der ersten oder zweiten Platte (16,18) in einem Winkel von ungefähr 90 Grad relativ zu der Basisoberfläche (48) erstreckt, und die andere Platte sich in einem Winkel kleiner als 90 Grad relativ zu der Basisoberfläche (48) erstreckt.

7. Träger gemäß Anspruch 6, **dadurch gekennzeichnet, dass** sich nach der thermischen Ausdehnung die eine Platte in einem Winkel kleiner als 90 Grad relativ zu der Basisoberfläche (48) erstreckt, und die andere Platte sich in einem Winkel kleiner als 90 Grad relativ zu der Basisoberfläche (48) erstreckt.

8. Träger gemäß Anspruch 1, **dadurch gekennzeichnet, dass** sich die Maschine (12) in Reaktion auf den Einsatz der Hitzequelle thermisch ausdehnt, und wobei die obere Platte (14) und die erste und die zweite Platte (16,18) jeweilig zu der Maschine (12) angeordnet sind, so dass sie sich in Antwort auf die thermische Ausdehnung der Letzteren bewegen.

9. Träger gemäß Anspruch 8, **dadurch gekennzeichnet, dass** die Längen und die Winkel ausgewählt sind, die thermische Ausdehnung der Letzteren aufzunehmen.

**Revendications**

1. Support (10) pour supporter une machine (12) par rapport à une surface de base (48) pendant que ladite machine (12) est soumise à une source de chaleur ; ledit support (10) comprenant une plaque supérieure (14) ayant une surface de support (20) s'étendant le long d'un premier plan (A-A) avant la dilatation thermique et adaptée pour recevoir ladite machine (12) ; une première plaque (16) s'étendant depuis ladite surface de base (48) jusqu'à ladite plaque supérieure (14) et la supportant ; une seconde plaque (18) s'étendant depuis ladite surface de base (48) jusqu'à ladite plaque supérieure (14) et la supportant, ladite seconde plaque (18) étant dans une relation espacée avec ladite première plaque (16) ; lesdites première et seconde plaques (16, 18) pouvant être soumises à différentes dilatations thermiques en réponse à ladite application de ladite source de chaleur ;
**caractérisé en ce que**
lesdites première et seconde plaques (16, 18) ont des longueurs différentes avant et après ladite dilatation thermique et s'étendent à des angles différents avant et après ladite dilatation thermique ; dans lequel lesdites longueurs et lesdits angles sont sélectionnés de façon à ce que, après ladite dilatation thermique desdites première et seconde plaques (16, 18), ladite plaque supérieure (14) s'étende dans un second plan (B-B) sensiblement parallèle audit premier plan (A-A).

2. Support selon la revendication 1, **caractérisé en ce que** lesdites longueurs sont lesdites longueurs respectives desdites première et seconde plaques (16, 18) s'étendant depuis ladite plaque supérieure (14) jusqu'à ladite surface de base (48), et lesdites angles sont lesdits angles respectifs (36, 38, 40, 42) auxquels lesdites première et seconde plaques (16, 18) s'étendent par rapport à ladite surface de base (48).

3. Support selon la revendication 1, **caractérisé en ce que** ladite plaque supérieure (14), et par conséquent ladite machine (12), s'étendent sensiblement horizontalement avant et après ladite dilatation thermique.

4. Support selon la revendication 1, **caractérisé en ce que** lesdites première et seconde plaques (16, 18) ont un même coefficient de dilatation thermique et dans lequel l'une desdites première et seconde plaques (16, 18) s'étend plus près de ladite source de chaleur que ladite autre plaque et par conséquent est soumise à une plus grande dilatation thermique que ladite autre plaque.

5. Support selon la revendication 4, **caractérisé en ce que** ladite longueur de ladite une plaque est inférieure à celle de ladite autre plaque.

6. Support selon la revendication 1, **caractérisé en ce que** avant ladite dilatation thermique, l'une desdites première et seconde plaques (16, 18) s'étend à un angle d'approximativement 90 degrés par rapport à ladite surface de base (48) et ladite autre plaque s'étend à un angle inférieur à 90 degrés par rapport à ladite surface de base (48).

7. Support selon la revendication 6, **caractérisé en ce que** après ladite dilatation thermique, ladite une plaque s'étend à un angle inférieur à 90 degrés par rapport à ladite surface de base (48) et ladite autre plaque s'étend à un angle inférieur à 90 degrés par rapport à ladite surface de base (48).

8. Support selon la revendication 1, **caractérisé en ce que** ladite machine (12) se dilate thermiquement en réponse à ladite application de ladite source de chaleur, et dans lequel ladite plaque supérieure (14) et lesdites première et seconde plaques (16, 18) sont situées par rapport à ladite machine (12) de façon à bouger en réponse à ladite dilatation thermique.

9. Support selon la revendication 8, **caractérisé en ce que** lesdites longueurs et lesdits angles sont sélectionnés pour convenir à ladite dilatation thermique.

**FIG. 1**

EP 1 148 287 B1

**FIG. 2A**

EP 1 148 287 B1

**FIG. 2B**

**FIG. 3**